# EUROPÄISCHE PATENTSCHRIFT

(11) **EP 2 914 529 B1**
(45) Veröffentlichungstag und Bekanntmachung des Hinweises auf die Patenterteilung: **14.12.2016**
(21) Anmeldenummer: 13779611.6
(22) Anmeldetag: 22.10.2013
(51) Int. Cl.: B66B 5/06

(54) **BEWEGUNGS-ÜBERWACHUNGSSYSTEM EINER AUFZUGSANLAGE**
MOVEMENT-MONITORING SYSTEM OF A LIFT INSTALLATION
DISPOSITIF DE SURVEILLANCE DU DÉPLACEMENT D'UN SYSTÈME D'ASCENSEUR

(30) Priorität: 30.10.2012 EP 12190499
(43) Veröffentlichungstag der Anmeldung: 09.09.2015
(73) Patentinhaber: Inventio AG, 6052 Hergiswil (CH)
(72) Erfinder: MICHEL, David, CH-8800 Thalwil (CH); BIRRER, Eric, CH-6033 Buchrain (CH); MÜLLER, Rudolf, J., CH-6004 Luzern (CH); GEISSHÜSLER, Michael, CH-6003 Luzern (CH)
(86) Internationale Anmeldenummer: PCT/EP2013/072062
(87) Internationale Veröffentlichungsnummer: WO 2014/067814

(56) Entgegenhaltungen:
- EP-A2- 2 108 609
- WO-A1-2010/107409
- JP-A- 2009 023 823

## Beschreibung

Die Erfindung betrifft ein Bewegungs-Überwachungssystem und ein Verfahren zum Überwachen einer Bewegung einer Aufzugskabine einer Aufzugsanlage, sowie eine Aufzugsanlage mit einem derartigen Bewegungs-Überwachungssystem.

Eine Aufzugsanlage ist in einem Gebäude ein- oder an dieses angebaut. Sie besteht im Wesentlichen aus einer Kabine, welche über Tragmittel mit einem Gegengewicht oder mit einer zweiten Kabine verbunden ist. Mittels eines Antriebs, der wahlweise auf die Tragmittel oder direkt auf die Kabine oder das Gegengewicht einwirkt, wird die Kabine entlang von, im Wesentlichen vertikalen, Führungsschienen verfahren. Die Aufzugsanlage wird verwendet um Personen und Güter innerhalb des Gebäudes über einzelne oder mehrere Etagen hinweg zu befördern.

Die Aufzugsanlage beinhaltet Vorrichtungen um die Aufzugskabine im Fall des Versagens des Antriebs, der Tragmittel oder anderen Aufzugskomponenten zu sichern. In der Regel wird zur Feststellung eines derartigen Fehlers eine Fahrgeschwindigkeit der Aufzugskabine überwacht. Bei Feststellung eines Fehlers werden üblicherweise mehrstufige Sicherungsmassnahmen initialisiert. Eine erste Sicherheitsmassnahme ist beispielsweise ein Abschalten des Aufzugsantriebs, bzw. eines Antriebsmotors des Antriebs und ein Betätigen von Antriebsbremsen um die Aufzugskabine stillzusetzen. Dies erfolgt beispielsweise durch Unterbrechen eines Aufzugs-Sicherheitskreises. Eine weitere Sicherheitsmassnahme beinhaltet die Aktivierung von Fangvorrichtungen oder entsprechenden Sicherheitsbremsen. Diese können im Bedarfsfall die Aufzugskabine auf den Führungsschienen abbremsen. Die Fahrgeschwindigkeit, allenfalls in Abhängigkeit einer Position der Aufzugskabine oder eines Betriebsmodus, wird heute vermehrt durch einen sogenannten elektronischen Begrenzer überwacht, welcher die erforderlichen Sicherheitsmassnahmen initialisieren kann.

Aus der internationalen Anmeldung WO 2003/011733 ist eine Einrichtung bekannt, welche mittels eines codierten Absolutpositions-Messsystems sichere Information an eine Steuerung eines Aufzugs liefert. Aus einer Positionsänderung in Abhängigkeit einer Zeit kann eine resultierende Fahrgeschwindigkeit berechnet werden. Da zugleich die Position der Aufzugskabine bekannt ist, kann damit ein gesamter Fahrverlauf geregelt und überwacht werden.

Aus der JP 2009 023823 A sind ein System und ein Verfahren gemäß dem Oberbegriff der Ansprüche 1, bzw. 13 bekannt.

Die im Folgenden beschriebenen Lösungen erlauben ein derartiges Messsystem, welches Fahrinformationen aus einem Wegmesssystem oder anderen Bewegungsmesssystemen bereitstellt, derart zu optimieren, dass es eine effiziente und reaktionsschnelle Überwachung der Fahrbewegungen der Aufzugskabine ermöglicht.

Gemäss einem Aspekt des Lösungsvorschlags beinhaltet das Bewegungs-Überwachungssystem zum Überwachen der Bewegung einer Aufzugskabine einer Aufzugsanlage ein erstes Bewegungserfassungsmodul zum Ermitteln einer ersten bereinigten Bewegungsgrösse in einem ersten Zeitintervall. Weiter beinhaltet das Bewegungs-Überwachungssystem einen ersten Beschleunigungssensor zur Erfassung einer ersten Beschleunigung der Aufzugskabine. Das erste Bewegungserfassungsmodul legt dabei das erste Zeitintervall zur Ermittlung der ersten bereinigten Bewegungsgrösse der Aufzugskabine in Abhängigkeit der erfassten ersten Beschleunigung der Aufzugskabine fest.

Beispielsweise beinhaltet das Bewegungs-Überwachungssystem einen ersten Bewegungssensor als Bestandteil des ersten Bewegungserfassungmoduls. Dieser erste Bewegungssensor erfasst einen Fahrweg der Aufzugskabine als Bewegungsgrösse derselben mit einer vorbestimmten Abtastrate. Eine erste Recheneinheit ermittelt aus dem Signal dieses ersten Bewegungssensors in Zeitintervallen eine Fahrgeschwindigkeit. Das Zeitintervall beträgt in der Regel ein Mehrfaches der Abtastrate. Die Abtastrate ist ein zeitlicher Rhythmus mit dem eine Fahrweginformation der Aufzugskabine abgefragt, bzw. ausgewertet wird. Naturgemäss ist jede einzelne Fahrweginformation mit einem Fehler behaftet. Dieser Fehler ist beispielsweise darauf zurückzuführen, dass der Fahrweg in Inkrementen erfasst wird, und demzufolge die einzelne Fahrweginformation entsprechend einem Messfehler ungenau ist. Eine Zeitverzögerung in der Erfassungs- und Auswertlogik bewirkt weiter eine Verzögerung der Information und zwischenzeitliche Veränderungen werden somit nicht erfasst, bzw. die Information bezieht sich auf einen Durchschnittswert über das Zeitintervall in dem die Fahrweginformation ausgewertet wird. Lösungsgemäss beinhaltet das Bewegungs-Überwachungssystem nun einen ersten Beschleunigungssensor, und eine erste Auswertelogik legt das erste Zeitintervall zur Ermittlung der ersten Fahrgeschwindigkeit in Abhängigkeit der erfassten ersten Beschleunigung der Aufzugskabine fest. Generell gesagt wird demzufolge zum

Überwachen der Bewegung der Aufzugskabine ein Fahrweg, bzw. eine Bewegungsgrösse der Aufzugskabine, mit einer vorbestimmten Abtastrate erfasst und die zu überwachende erste bereinigte Bewegungsgrösse wird auf der Basis des festgelegten ersten Zeitintervalls ermittelt.

Hierbei ist zu beachten, dass sich ein Fehler abhängig vom Betriebs- oder Fahrzustand der Aufzugskabine unterschiedlich auswirkt. Bei kleiner Fahrgeschwindigkeit wirkt sich beispielsweise ein Fehler der Fahrweginformation sehr dominant auf eine ermittelte Fahrgeschwindigkeit aus. Je kürzer das Zeitintervall ist, umso ungenauer werden die aus diesen Fahrinformationen ermittelten Bewegungsgrössen. Dies stellt hohe Anforderungen an einen Regelalgorithmus, der einen Fahrverlauf des Aufzugs regelt. Mit zunehmender Beschleunigung, das heisst bei schnellen Veränderungen der Fahrgeschwindigkeit, wirkt sich hingegen die Zeitverzögerung zunehmend dominant auf die ermittelte Fahrgeschwindigkeit aus.

Anhand der vom Beschleunigungssensor ermittelten ersten Beschleunigung kann nun das erste Zeitintervall zur Ermittlung der bereinigten Bewegungsgrösse, bzw. der Fahrgeschwindigkeit so angepasst werden, dass eine Summe des Fehlers aus der Fahrweginformation und des Fehlers aus der Zeitverzögerung minimalisiert wird. Vorzugsweise ist der Berechnungsalgorithmus so ausgeführt, dass die Ermittlung der ersten Fahrgeschwindigkeit, bzw. der ersten Bewegungsgrössen, immer mit einer Mehrzahl unterschiedlicher Zeitintervalle durchgeführt wird. Die den unterschiedlichen Zeitintervallen zugeordneten, errechneten ersten vorläufigen Bewegungsgrössen werden zwischengespeichert. Aufgrund der vom ersten Beschleunigungssensor ermittelten ersten Beschleunigung der Aufzugskabine wird das optimale erste Zeitintervall festgelegt. Die diesem optimalen ersten Zeitintervall zugeordnete, erste vorläufige Bewegungsgrösse wird aus dem Zwischenspeicher ausgelesen und als erste bereinigte Bewegungsgrösse ausgegeben. Alternativ können auch die ermittelten Bewegungsgrössen während einer Mehrzahl folgender Zeitintervalle zwischengespeichert werden. Aufgrund der vom ersten Beschleunigungssensor ermittelten ersten Beschleunigung der Aufzugskabine wird das optimale erste Zeitintervall festgelegt. Die diesem optimalen ersten Zeitintervall zugeordneten ermittelten Bewegungsgrössen werden aus dem Zwischenspeicher ausgelesen, daraus die ersten bereinigten Bewegungsgrössen berechnet und als erste bereinigte Bewegungsgrössen ausgegeben, bzw. festgelegt.

Mit dieser situationsangepassten Definition des Zeitintervalls kann die Gesamtqualität des Bewegungs-Überwachungssystems zum Überwachen der Bewegung einer Aufzugskabine optimiert werden. Mit der Zwischenspeicherung von ersten vorläufigen Bewegungsgrössen kann, abhängig von der vom ersten Beschleunigungssensor ermittelten ersten Beschleunigung, direkt die dem optimalen ersten Zeitintervall entsprechende vorläufige Bewegungsgrösse oder Bewegungsgrössen abgerufen, allenfalls berechnet und ausgegeben werden. Es muss somit nicht ein weiterer Berechnungs- oder Erfassungszyklus abgewartet werden, sondern es kann direkt die erste bereinigte Bewegungsgrösse abgerufen oder berechnet werden. Damit kann eine Sicherheitsbeurteilung schnell, bzw. zeitnah erfolgen.

Der aus der Fahrweginformation resultierende, idealisierte Fehler der Fahrgeschwindigkeit ergibt sich aus dem zweifachen Betrag des Messfehlers dividiert durch das Zeitintervall. Daraus ist ersichtlich, dass der resultierende Fehler bei kleinem Zeitintervall gross wird, da der Messfehler der Fahrweginformation systembedingt konstant bleibt. Der aus der Zeitverzögerung resultierende Fehler errechnet sich näherungsweise aus der Multiplikation der Beschleunigung und dem halben Zeitintervall. Daraus ergibt sich, dass der resultierende Fehler entsprechend dem Produkt aus Beschleunigung und Zeitintervall verändert. Optimalerweise ist dementsprechend das Zeitintervall so gewählt, dass die Summe der Fehler minimal wird.
Bei einem angenommenen Messfehler von 0.5 Millimeter ergibt sich somit bei kleiner Beschleunigung ein optimales Zeitintervall von etwa 40 Millisekunden, während das optimale Zeitintervall bei einer festgestellten Beschleunigung von 1g (Erdbeschleunigung) im Bereich von 10 Millisekunden liegt. Diese Wertangaben sind natürlich abhängig vom tatsächlichen Messfehler. Somit verkürzt vorzugsweise das erste Bewegungserfassungsmodul das Zeitintervall mit zunehmender Beschleunigung bzw. es verlängert das Zeitintervall bei abnehmender Beschleunigung. Bei idealer Betrachtung entspricht das optimale Zeitintervall einem Intervall zu dem ein Fehler aus der Fahrweginformation gleich dem Fehler aus der Zeitverzögerung wird.

Vorzugsweise ist die von den Bewegungserfassungsmodulen ermittelte erste bereinigte Bewegungsgrösse eine erste Fahrgeschwindigkeit, ein erster Fahrweg oder eine erste Position der Aufzugskabine, und das Bewegungserfassungsmodul benutzt dazu mindestens einen Sensor zur Erfassung der ersten Fahrgeschwindigkeit, des ersten Fahrwegs oder der ersten Position der Aufzugskabine im Fahrschacht. Bedarfsgemäss können natürlich weitere bereinigte Bewegungsgrössen anhand der erfassten Bewegungsgrösse ermittelt werden. So erfasst, wie vorgängig beispielhaft erläutert, das Bewegungsmodul den Fahrweg und ermittelt anhand dieser Bewegungsgrösse die Fahrgeschwindigkeit. Andere Ausführungen erfassen beispielsweise die Position der Aufzugskabine im Fahrschacht und ermitteln anhand dieser Bewegungsgrösse den Fahrweg und die Fahrgeschwindigkeit. Die Wahl der optimalen Ausführung ergibt sich aus der Verfügbarkeit oder Wahl von Sensoren zur Erfassung der Bewegungsgrösse der Aufzugskabine.

Vorzugsweise beinhaltet das Bewegungs-Überwachungssystem ein zweites Bewegungserfassungsmodul zum Ermitteln einer zweiten bereinigten Bewegungsgrösse in einem zweiten Zeitintervall. Das zweite Bewegungserfassungsmodul legt hierbei das zweite Zeitintervall zur Ermittlung der bereinigten Bewegungsgrösse der Aufzugskabine in Abhängigkeit der vom ersten Beschleunigungssensor erfassten ersten Beschleunigung der Aufzugskabine fest. Alternativ kann das zweite Bewegungserfassungsmodul auch direkt das vom ersten Bewegungserfassungsmodul bereitgestellte erste Zeitintervall als zweites Zeitintervall übernehmen. Alternativ kann natürlich auch das zweite Bewegungserfassungsmodul das zweite Zeitintervall zur Ermittlung der zweiten bereinigten Bewegungsgrösse der Aufzugskabine in Abhängigkeit einer von einem zweiten Beschleunigungssensor erfassten zweiten Beschleunigung der Aufzugskabine festlegen. Mit dieser Ausführung wird die Bewegung der Aufzugskabine zweifach mit unabhängigen Modulen und allenfalls auch unabhängigen Sensoren erfasst. Ein Versagen oder Fehler eines Moduls oder eines Sensors kann so festgestellt werden. Damit ist die Sicherheit der Einrichtung zum Überwachen der Bewegung der Aufzugskabine verbessert.

Vorzugsweise gibt das Bewegungs-Überwachungssystem zum Überwachen der Bewegung der Aufzugskabine die ermittelte, erste oder zweite bereinigte Bewegungsgrösse, beispielsweise die erste oder zweite Fahrgeschwindigkeit und die erste oder zweite Position der Aufzugskabine im Fahrschacht, an eine Aufzugssteuerung der Aufzugsanlage weiter. Die Aufzugssteuerung beinhaltet einen Fahrtenregler, der den Antrieb der Aufzugsanlage entsprechend regelt, um einem vorgegebenen Fahrprofil zu folgen. Alternativ oder ergänzend vergleicht das Bewegungs-Überwachungssystem weiter die ermittelte, erste oder zweite bereinigte Bewegungsgrösse, beispielsweise die erste oder zweite Fahrgeschwindigkeit, mit einer Grenzgeschwindigkeit und löst bei Überschreitung der Grenzgeschwindigkeit eine Sicherheitsmassnahme aus. Die Grenzgeschwindigkeit wird beispielsweise in einem Fahrkurvenrechner bereitgestellt. Der Fahrkurvenrechner ermittelt eine für eine entsprechende Fahrposition der Aufzugskabine im Schacht zulässige erste und allenfalls zweite oder weitere Grenzgeschwindigkeit. Bei Überschreitung derselben wird eine stufengerechte Sicherheitsmassnahme ausgelöst. Alternativ können die Grenzgeschwindigkeiten auch als feste Werte vorgegeben sein. Hierbei wird das Bewegungs-Überwachungssystem beispielsweise beim Lieferanten auf diese festen Werte eingestellt.

In einer vorzugsweisen Ausgestaltung erfasst der oder die Sensoren des Bewegungserfassungsmoduls eine absolute Position der Aufzugskabine im Fahrschacht. Ein solches Absolutpositionssystem arbeitet beispielsweise mit Sensoren, welche ein magnetisches, ein optisches, ein akustisches oder ein elektrisches Signal aufnehmen und welche mit entsprechend ausgebildeten Signalerzeugern, Signalträgern und/oder Signalreflektoren zusammenwirken. Ein magnetisches System arbeitet beispielsweise mit einem im Fahrschacht angeordneten Magnetband, welches eine magnetische Kodierung aufweist. Anhand der Kodierung können Positionen erlernt, gespeichert und dann auch erkannt werden. Die Fahrweginformation zur Ermittlung entsprechender Bewegungsgrössen ergibt sich dann aus der Differenz von einander folgenden Absolutpositionen. Ein optisches System arbeitet beispielsweise mit Lasern, welche eine Distanz zu einem Referenzpunkt erfassen oder es arbeitet mit Bildmustern, welche von einem Bildaufnehmer erfasst werden. Sinngemäss, wie bei der magnetischen Kodierung, wird hier eine Bildkodierung verwendet, wobei die Bildinformation speziell angeordnete Bilder, wie ein Strichcode, sein kann oder es kann eine zufällige, beliebige Bildstruktur verwendet werden. Die Fahrweginformation, bzw. die Bewegungsgrösse kann auch durch Vergleich von einander folgenden Bildern ermittelt werden. Hierbei wird die Bildabfolge überschneidend gewählt. Dadurch kann eine örtliche Verschiebung einer beliebigen Marke, oder eines Bildmusters zwischen zwei oder mehreren Bildern ausgemessen und dementsprechend ein Differenzweg ermittelt werden.
Ein akustisches System verwendet beispielsweise einen Ultraschallsensor zur Feststellung einer Distanz zu einem Referenzpunkt oder ein elektrisches System arbeitet mittels Positionsschaltern oder erfasst einen distanzabhängigen Widerstand in einem Messdraht. So kann mittels bekannten Messmethoden ein sicheres und regeltechnisch optimiertes System zur Überwachung der Bewegung der Aufzugsanlage realisiert werden.

In einer vorteilhaften Ausgestaltung sind Bauteile des Bewegungs-Überwachungssystems auf zwei Funktionsgruppen oder Funktionseinheiten aufgeteilt, welche im Wesentlichen autonom arbeiten. Eine erste Funktionseinheit umfasst beispielsweise das erste Bewegungserfassungsmodul, mit Sensor, Prozessor, Vergleichern etc. und den ersten Beschleunigungssensor. Eine zweite Funktionseinheit ist dementsprechend durch das zweite Bewegungserfassungsmodul, natürlich mit erforderlichem Sensor, Prozessor, Vergleichern etc. und dem zweiten Beschleunigungssensor gebildet. Die Vergleicher des jeweiligen Bewegungserfassungsmoduls oder der jeweiligen Funktionsgruppe vergleichen die korrespondierenden Signale, wie die erste und die zweite Kapinenpositionen, die erste und die zweite Fahrgeschwindigkeit, etc., der anderen Funktionseinheit mit den entsprechenden Signalen der eigenen Funktionseinheit, und sie geben ein Warnsignal aus, wenn eine relevante Abweichung festgestellt ist.

Alternativ ist der Vergleicher unabhängig von der ersten oder zweiten Funktionseinheit im Bewegungs-Überwachungssystem angeordnet. Er vergleicht in dieser Ausführung Signale und / oder Zwischenergebnisse der ersten und der zweiten Funktionseinheit miteinander und gibt das Warnsignal aus, wenn relevante Abweichungen zwischen den zwei Funktionseinheiten festgestellt werden.

Im Gesamten lässt sich mit derartig redundanten Ausführungen eine komplette redundante Einrichtung zur Erfassung eines Fahrwegs der Aufzugskabine und zur Überwachung von Bewegungen der Aufzugskabine realisieren. Dieses Bewegungs-Überwachungssystem ist besonders sicher und kann beispielsweise als sichere Alternative zu einem herkömmlichen mechanischen Geschwindigkeitsbegrenzer verwendet werden.

Vorzugsweise verfügt das Bewegungs-Überwachungssystem über einen Ereignis- oder Datenspeicher. In diesem Ereignis- oder Datenspeicher werden beispielsweise spezielle Ereignisse festgehalten und ermittelte, bereinigte Bewegungsgrössen, die zu diesem Ereignis führten, werden gespeichert. Allenfalls werden bereinigte Bewegungsgrössen generell über einen vorbestimmten Zeitraum gespeichert. Damit können Fehler nachvollzogen werden oder systematische Unterschiede, beispielsweise zwischen den Bewegungserfassungsmodulen, können erkannt und dementsprechend beseitigt werden. Allenfalls werden Servicemeldungen generiert, wenn zwischen den einzelnen Bewegungserfassungsmodulen systematische Unterschiede festgestellt werden. Systematische Unterschiede sind beispielsweise konstante absolute oder relative Differenzen.

Die Ausgabe eines Warnsignals bewirkt in einer Ausgestaltung der vorgeschlagenen Lösung eine Stillsetzung der Aufzugskabine. Hierbei wird ein aktueller Fahrbefehl oder ein anstehender Fahrablauf ordnungsgemäss abgeschlossen und anschliessend wird die Aufzugskabine durch Abschalten des Antriebsmotors und Betätigen der Aufzugsbremse stillgesetzt. Damit wird insgesamt ein sicherer, effizienter und angenehmer Betrieb der Aufzugsanlage ermöglicht. Ein interner Fehler des Bewegungs-Überwachungssystems kann somit durch das Bewegungs-Überwachungssystem zur Erfassung eines Fahrwegs der Aufzugskabine selbst erkannt werden, und die Aufzugsanlage kann durch einen Servicetechniker repariert werden. Durch das ordnungsgemässe Abschliessen eines allenfalls anstehenden Fahrbefehls wird einem Einschliessen von Personen in einer plötzlich stillstehenden Aufzugskabine vorgebeugt.

Vorzugsweise bewirkt das Auslösen der Sicherheitsmassnahme in einer ersten Stufe ein Unterbrechen eines Sicherheitskreises, wodurch die Aufzugskabine durch normale Betriebsmittel angehalten wird. Der Sicherheitskreis überwacht sicherheitsrelevante Funktionen des Aufzugs. Ein Unterbrechen des Sicherheitskreises führt üblicherweise zu einem sofortigen Abschalten des Aufzugsantriebs und zu einer Betätigung der Antriebsbremse. In einer zweiten Stufe bewirkt das Auslösen der Sicherheitsmassnahme eine Aktivierung einer Notbremsvorrichtung, wodurch ein Anhalten der Aufzugskabine auch bei einem Versagen der normalen Betriebsmittel erfolgt. Als Notbremsvorrichtung wird beispielsweise eine Fangvorrichtung verwendet, welche in der Lage ist auch bei einem Versagen von Tragmitteln die Aufzugskabine an Führungsschienen abzubremsen. In einer optimalen Anordnung ist das Bewegungs-Überwachungssystem zum Überwachen der Bewegung der Aufzugskabine ausgeführt, um beispielsweise bei einem unerwarteten Ansteigen der Fahrgeschwindigkeit mehrere Sicherheitsmassnahmen einander nachfolgend zu initialisieren. Einander nachfolgend bedeutet beispielsweise, dass bei Überschreitung eines ersten Grenzwerts als erste Sicherheitsmassnahme eine Antriebsregelung angewiesen wird eine Fahrgeschwindigkeit sofort zu reduzieren und in einem nächsten Stockwerk anzuhalten. Wird ein zweiter Grenzwert überschritten wird als zweite Sicherheitsmassnahme der vorgängig erwähnte Sicherheitskreis geöffnet und die Antriebsbremse wird sofort betätigt, was zu einem sofortigen Anhalten der Aufzugskabine führt. Wird nun trotz aller Massnahmen ein weiterer Grenzwert überschritten, wird als weitere Sicherheitsmassnahme direkt die Fangvorrichtung betätigt und die Aufzugskabine wird durch die Fangvorrichtung an den Führungsschienen festgeklemmt.

Vorzugsweise beinhaltet das Bewegungs-Überwachungssystem zum Überwachen der Bewegung der Aufzugskabine weiter eine Absturzüberwachung. Diese überwacht die Signale der Beschleunigungssensoren, bzw. des ersten und gegebenenfalls des zweiten Beschleunigungssensors. Sie aktiviert direkt die Notbremsvorrichtung oder eine entsprechende Fangvorrichtung, wenn die erste oder die zweite Beschleunigung der Aufzugskabine über einen Zeitbereich einen vorbestimmten Beschleunigungswert übersteigt. Damit kann beispielsweise ein Reissen einer Kabinenaufhängung schnell erkannt werden, da dann die Beschleunigung der Aufzugskabine auf einen Freifallwert ansteigt. Somit kann, bevor überhaupt eine kritische Geschwindigkeit entsteht, die Aufzugskabine aufgefangen und an den Führungsschienen festgeklemmt werden.

Im Folgenden sind beispielhafte Ausführungen anhand von Beispielen und schematischen Ausführungen erläutert. Es zeigen:
- Figur 1: eine schematische Ansicht einer Aufzugsanlage in der Seitenansicht,
- Figur 2: eine schematische Ansicht der Aufzugsanlage im Querschnitt,
- Figur 3: ein erstes Beispiel eines Bewegungs-Überwachungssystems,
- Figur 4: Speicherkonzept zum Bewegungs-Überwachungssystems von Figur 3,
- Figur 5: ein zweites Beispiel eines Bewegungs-Überwachungssystems, und
- Figur 6: Speicherkonzept zum Bewegungs-Überwachungssystems von Figur 5.

In den Figuren sind für gleichwirkende Teile über alle Figuren hinweg dieselben Bezugszeichen verwendet.

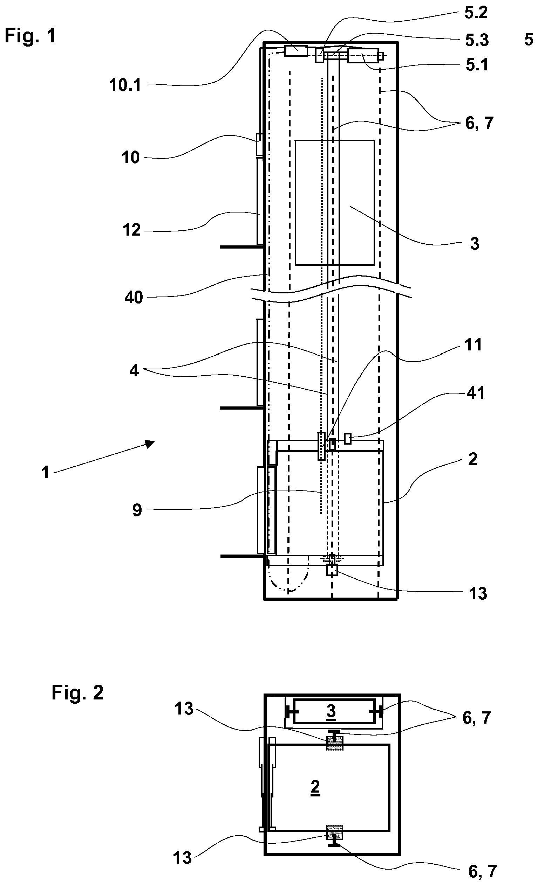

Figur 1 zeigt eine Aufzugsanlage 1 in einer Gesamtschau. Die Aufzugsanlage 1 ist in einem Gebäude eingebaut und sie dient dem Transport von Personen oder Gütern innerhalb des Gebäudes. Die Aufzugsanlage beinhaltet eine Aufzugskabine 2, welche sich entlang von Führungsschienen 6 auf- und abwärts bewegen kann. Ein Antrieb 5 dient zum Antreiben und Halten der Aufzugskabine 2. Der Antrieb 5 ist beispielsweise im oberen Bereich des Gebäudes angeordnet und die Kabine 2 hängt mit Tragmitteln 4, beispielsweise Tragseilen oder Tragriemen, am Antrieb 5. Der Antrieb besteht in der Regel aus einer Treibzone 5.3 zum Antreiben der Tragmittel 4, aus einem Motor 5.1 zum Antreiben der Treibzone 5.3 und einer Antriebsbremse 5.2 zum Halten des Antriebs in einem Ruhezustand. Die Tragmittel 4 sind über den Antrieb 5, bzw., die Treibzone 5.3 weiter zu einem Gegengewicht 3 geführt. Das Gegengewicht 3 gleicht einen Massenanteil der Aufzugskabine 2 aus, so dass der Antrieb 5 zur Hauptsache lediglich ein Ungleichgewicht zwischen Kabine 2 und Gegengewicht 3 ausgleichen muss. Der Antrieb 5 ist im Beispiel im oberen Bereich des Gebäudes angeordnet. Er könnte selbstverständlich auch an einem anderen Ort im Gebäude, oder im Bereich der Kabine 2 oder des Gegengewichts 3 angeordnet sein. Andere Ausführungen des Antriebs sind ebenso möglich. So kann die Antriebsbremse 5.2 beispielsweise auch, getrennt vom Antrieb 5, an der Kabine 2 angeordnet sein oder der Antrieb 5 kann direkt die Kabine 2 antreiben.
Die Aufzugsanlage 1 wird von einer Aufzugssteuerung 10 gesteuert. Die Aufzugssteuerung 10 nimmt Benutzeranfragen entgegen, optimiert den Betriebsablauf der Aufzugsanlage und steuert, in der Regel über eine Antriebssteuerung 10.1 den Antrieb 5. Die Antriebssteuerung 10.1 kann mit der Aufzugssteuerung 10 zusammengebaut sein, sie kann aber auch getrennt von der Aufzugssteuerung angeordnet sein. Die Aufzugssteuerung 10 überwacht zudem einen Sicherheitszustand der Aufzugsanlage und unterbricht den Fahrbetrieb, wenn ein unsicherer Betriebszustand eintritt. Diese Überwachung wird in der Regel mit Verwendung eines Sicherheitskreises 40 durchgeführt, in dem alle sicherheitsrelevanten Funktionen eingebunden sind.

Die Aufzugskabine 2 und im Bedarfsfall auch das Gegengewicht 3 ist weiter mit einem Bremssystem ausgerüstet, welches geeignet ist um die Aufzugskabine 2 bei einer unerwarteten Bewegung oder bei Übergeschwindigkeit zu sichern und/oder zu verzögern. Das Bremssystem umfasst Sicherheitsbremsen oder Fangvorrichtungen 13, welche am Fahrkörper 2, 3 angebaut sind. Die Sicherheitsbremsen 13 sind im Beispiel unterhalb der Kabine 2 angeordnet und sie sind elektrisch über eine Brems-Steuerung 41 angesteuert. Die zur Ansteuerung benötigten Signale können über drahtgebundene Signalleitungen ausgetauscht werden oder sie können natürlich auch drahtlos übermittelt werden. Die Bremssteuerung 41 ist zu einem Bewegungs-Überwachungsmodul 11 verbunden, welches die Fahrbewegungen der Aufzugskabine 2 überwacht. Das Bewegungs-Überwachungsmodul 11 erfasst und ermittelt relevante Bewegungsgrössen der Aufzugskabine und gibt diese Grössen an die Aufzugssteuerung 10 weiter oder löst allenfalls erforderliche Sicherheitsmassnahmen aus. Im Beispiel arbeitet das Bewegungs-Überwachungsmodul 11 mit einem Signalband 9 zusammen, welches eine Erfassung der Position der Aufzugskabine im Fahrschacht ermöglicht und das Bewegungs-Überwachungsmodul 11 initialisiert falls erforderlich notwendige Sicherheitsmassnahmen. Ein mechanischer Geschwindigkeitsbegrenzer, wie er üblicherweise verwendet ist, erübrigt sich.

Figur 2 zeigt die Aufzugsanlage von Figur 1 in einer schematischen Draufsicht. Das Bremssystem beinhaltet die zwei Sicherheitsbremsen 13. Die beiden Sicherheitsbremsen 13 sind vorzugsweise baugleich oder spiegelsymmetrisch ausgeführt und sie wirken auf die zu beiden Seiten der Kabine 2 angeordneten Bremsschienen ein. Die Bremsschienen sind im Beispiel identisch zu den Führungsschienen 6.

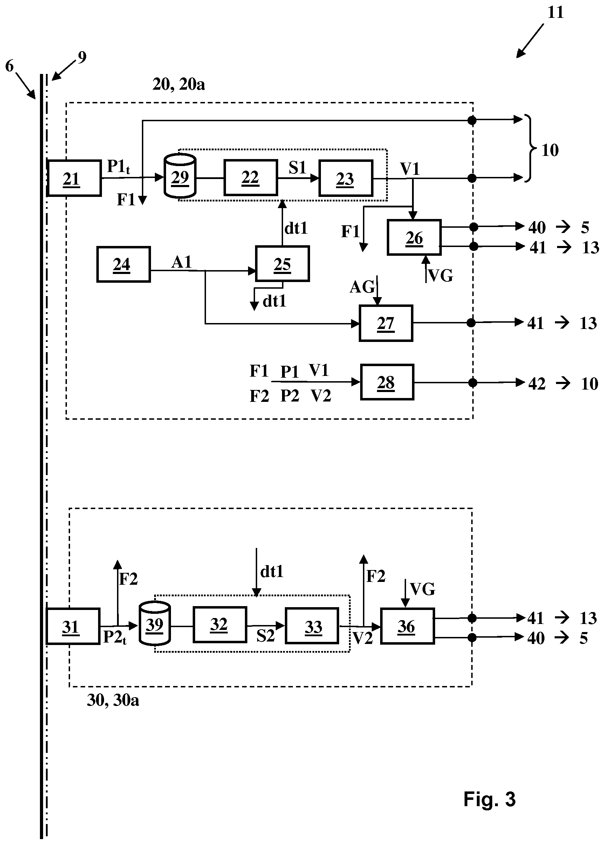

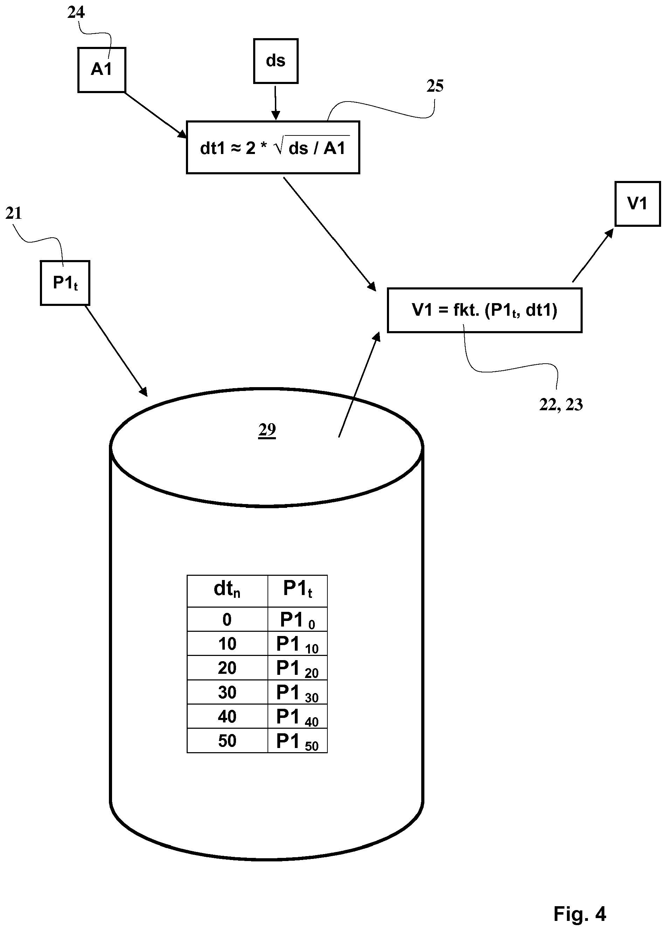

Das Bewegungs-Überwachungsmodul 11 besteht im Ausführungsbeispiel nach Fig. 3 aus einem ersten Bewegungserfassungsmodul 20 und einem zweiten Bewegungserfassungsmodul 30 und das Bewegungs-Überwachungsmodul 11 ist dementsprechend in wichtigen Funktionen redundant ausgeführt. Beide Bewegungsmodule 20, 30 beinhalten einen ersten, bzw. einen zweiten Sensor 21, 31 die im Beispiel mit einem Signalträger 9 zusammenwirkt. Der Signalträger 9 ist an einer Führungsschiene 6 angebracht und er beinhaltet in diesem Ausführungsbeispiel eine magnetische Kodierung. Diese magnetische Kodierung beinhaltet eine Vielzahl von in einer Reihe angeordneten Kodemarken, welche entweder als Südpol oder als Nordpol magnetisiert sind. Mehrere aufeinander folgende Kodemarken bilden ein Kodewort. Die Kodewörter wiederum sind in einer Reihe als Kodemarkenmuster mit binärer Pseudozufallskodierung angeordnet. Jedes Kodewort stellt eine absolute Kabinenposition im Fahrschacht dar. Eine Genauigkeit ds der Positionserfassung eines derartigen Systems beträgt beispielsweise etwa 0.5 Millimeter.
Das erste Bewegungserfassungsmodul 20 beinhaltet somit den ersten Sensor 21 oder eine Gruppe von Einzelsensoren, vorzugsweise Hallelemente, mit zugehöriger Auswertelogik und Speichern. Der erste Sensor 21 erfasst die Kodemarken und bestimmt die aktuelle erste Kabinenposition P1ₜ in kurzen Intervallen dtₙ, bzw. mit einer entsprechenden Abtastrate. Ein derartiges Intervall beträgt beispielsweise 10 Millisekunden. Die derart erfassten Kabinenpositionen P1ₜ werden im Beispiel einerseits als erste bereinigteKabinenposition P1 direkt an die Aufzugssteuerung 10 weitergeleitet und andererseits in einem Speicher 29 abgelegt. Im Speicher 29 werden, wie in Figur 4 schematisch dargestellt, die aktuelle Kabinenposition P1ₜ₌₀ sowie mehrere zurückliegende Kabinenpositionen P1_{_t=-10}, P1_{_1=-20}, P1_{_t} gespeichert.
Das erste Bewegungserfassungsmodul 20 beinhaltet nun weiter einen ersten Beschleunigungssensor 24, der eine aktuelle erste Beschleunigung A1 der Aufzugskabine erfasst. Ein Beschleunigungsrechner 25 bestimmt, auf der Basis der systembedingten Genauigkeit ds, der Positionserfassung und der aktuellen ersten Beschleunigung A1, ein optimales erstes Zeitintervall dt1 zur Ermittlung einer ersten bereinigten Bewegungsgrösse S1, V1 der Aufzugskabine. Ein Wegrechner 22 und ein Geschwindigkeitsrechner 23 greifen nun auf der Basis des optimalen ersten Zeitintervalls dt1 die entsprechenden zurückliegenden Kabinenpositionen P1_{_t} ab und ermitteln die ersten bereinigten Bewegungsgrössen S1, V1. Im Grundsatz ermittelt der Wegrechner 22 aus den einander nachfolgenden Kabinenpositionen P1_{_t=0}, P1_{_t=10}, P1_{_t=20}, .. P1_{_t} Weginkremente oder einen zurückgelegten Fahrweg S1 und ein Geschwindigkeitsrechner 23 ermittelt aus dem zurückgelegten Fahrweg S1, bzw. den Fahrweginkrementen, eine erste Fahrgeschwindigkeit V1. Im Beispiel ist der Weg- und Geschwindigkeitsrechner 22, 23 zusammengefasst und er ermittelt direkt aus den einander nachfolgenden Kabinenpositionen P1_{_t=0}, P1_ₜ₌₁₀, P1_ₜ₌₂₀, .. P1_{_t} die erste bereinigte Bewegungsgrösse V1. Die derart ermittelte erste bereinigte Bewegungsgrösse V1 wird nun ebenfalls der Aufzugssteuerung 10 zur Steuerung und Regelung des Aufzugs zur Verfügung gestellt. Die Auswertung der vorgenannten Daten erfolgt in Zeitschritten entsprechend dem ersten Zeitintervall dt1.
Ein typisches maximales erstes Zeitintervall dt1, welches zum Ermitteln der ersten bereinigten Bewegungsgrössen V1 verwendet wird liegt, bei einer Genauigkeit der Positionserfassung von etwa 0.5 Millimeter, in der Grössenordnung von 30 bis 50 Millisekunden. Die Zwischenspeicherung im Speicher 29 umfasst dementsprechend zumindest die dem maximalen Zeitintervall entsprechenden Kabinenpositionen. Mit zunehmender Beschleunigung kann dieses Zeitintervall auf bis zu 10 Millisekunden reduziert werden. Dementsprechend kann ein zeitlicher Fehler auf etwa 5 Millisekunden reduziert werden. Besonders nutzbringend ist eine derartige Reduktion des Zeitintervalls bei Beschleunigungsbereichen über etwa 0.5g (halbe Erdbeschleunigung), da derartige Beschleunigungen im Normalbetrieb nicht auftreten und solche Beschleunigungen schnell zu hohen Geschwindigkeiten führen.
Im Weiteren beinhaltet das erste Bewegungserfassungsmodul 20 gemäss Figur 3 eine optionale Überwachungseinheit 26, welche die erste bereinigte Fahrgeschwindigkeit V1 mit einer oder mehreren Grenzgeschwindigkeiten VG vergleicht. Bei Feststellung einer Überschreitung dieser Grenzwerte wird der Sicherheitskreis 40 unterbrochen und damit der Antrieb 5 stillgesetzt oder es wird, beispielsweise über eine Bremssteuerung 41 eine Sicherheitsbremse 13 betätigt.
In der weiterführenden Ausführung nach dem vorliegenden Beispiel beinhaltet das erste Bewegungserfassungsmodul 20 weiter eine Absturzüberwachung 27. Die Absturzüberwachung 27 vergleicht die erste Beschleunigung A1 mit einem Beschleunigungsgrenzwert AG und betätigt im Bedarfsfall über die Bremssteuerung 41 die Sicherheitsbremse 13.

Im Weiteren umfasst nun das vorliegende Bewegungs-Überwachungsmodul 11 gemäss Figur 3 das zweite Bewegungserfassungsmodul 30, welches zur Verbesserung der Zuverlässigkeit des Systems den zum ersten Sensor 21 redundanten zweiten Sensor 31 beinhaltet. Analog zum ersten Bewegungserfassungsmodul 20 erfasst der zweite Sensor 31 die Kodemarken des Signalträgers 9 und bestimmt eine aktuelle zweite Kabinenposition P2, welche im Grundsatz der ersten Kabinenposition P1 entsprechen sollte. Ein Wegrechner 32 ermittelt aus einander nachfolgenden zweiten Kabinenpositionen Weginkremente oder einen zurückgelegten zweiten Fahrweg S2 und ein zweiter Geschwindigkeitsrechner 33 ermittelt aus dem zurückgelegten zweiten Fahrweg S2 eine zweite Fahrgeschwindigkeit V2. Die Funktionsweise mit Erfassung und Zwischenspeicherung der Kabinenpositionen entspricht sinngemäss den Ausführungen wie vorgängig beim ersten Bewegungserfassungsmodul 20 erläutert. Das zweite Bewegungserfassungsmodul 30 bezieht in der vorliegenden Ausführung das erste Zeitintervall dt1 zur Erfassung, bzw. Ermittlung der bereinigten, zweiten Bewegungsgrösse P2, S2, V2 vom ersten Bewegungsmodul 20. Im Weiteren beinhaltet auch das zweite Bewegungserfassungsmodul 30 eine Überwachungseinheit 36, welche die zweite Fahrgeschwindigkeit V2 mit einer oder mehreren Grenzgeschwindigkeiten VG vergleicht. Bei Feststellung einer Überschreitung dieser Grenzwerte, bzw. der Grenzgeschwindigkeiten VG, wird der Sicherheitskreis 40 unterbrochen und damit der

Antrieb 5 stillgesetzt oder es wird, über die Bremssteuerung 41, die Sicherheitsbremse 13 betätigt.

Im Weiteren übernimmt das erste Bewegungsmodul 20 die vom zweiten Bewegungserfassungsmodul 30 erfassten zweiten bereinigtenBewegungsgrössen P2, V2 und vergleicht in einem Vergleicher 28 die entsprechenden Werte mit den ersten bereinigten Bewegungsgrössen P1, V1 des ersten Bewegungsmoduls 20. Sofern der Vergleich eine Übereinstimmung der bereinigten Bewegungsgrössen P1/P2, V1/V2 ergibt, wird ein Status okay ausgegeben. Sofern der Vergleich keine Übereinstimmung der bereinigten Bewegungsgrössen ergibt, wird der Aufzugsantrieb, beispielsweise durch Unterbrechung des Sicherheitskreises 40 oder durch einen entsprechenden Warnlevel 42, der an die Aufzugs- oder Antriebssteuerung 10, 10.1 abgegeben wird, stillgesetzt.

Die beiden Bewegungsmodule 20, 30 sind vorzugsweise in einem gemeinsamen Gehäuse angeordnet und können als Einheit auf der Aufzugskabine 2 angeordnet und zum Signalträger 9 ausgerichtet werden. Selbstverständlich können die einzelnen Rechner 22, 23, 25, Vergleicher 28 und Überwachungseinheiten 26, 27 sowie der Beschleunigungssensor 24, allenfalls mit dem Sensor 21 auf gemeinsamen Platinen zusammengebaut sein oder die Rechenfunktionalitäten können in gemeinsamen Prozessoren zusammengeführt sein. Zur Verbesserung der Sicherheit und Realisierung von redundanten Einheiten sind im vorliegenden Beispiel die beiden Bewegungsmodule 20, 30 mit redundanten Sensoren 21, 31 zur Erfassung von bereinigten Bewegungsgrössen und mit redundanten Prozessoren zur Auswertung der Sensorsignale ausgeführt. Dabei verwendet das zweite Bewegungsmodul 30, das vom ersten Bewegungsmodul 20 ermittelte erste Zeitintervall dt1 mit. Das erste Zeitintervall dt1 entspricht somit zugleich zugleich einem zweiten Zeitintervall dt2.

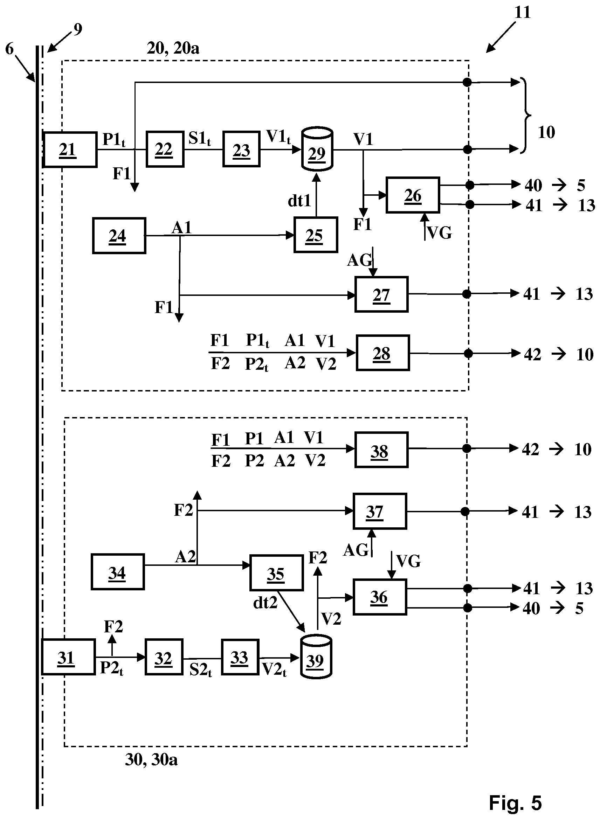

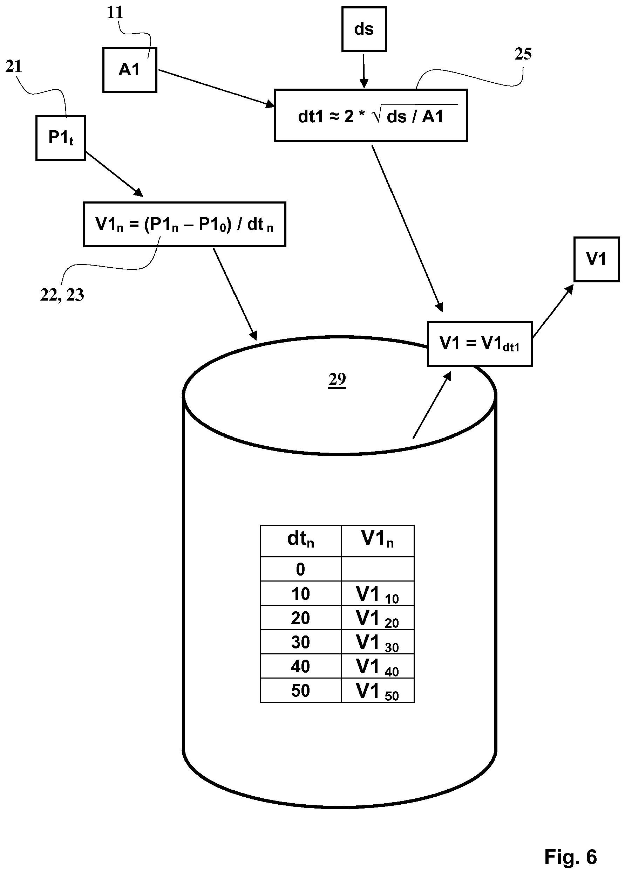

In einer weiterentwickelten Ausführung, wie sie in Figur 5 dargestellt ist, wird mit anderer Zwischenspeicherung und erweiterter Redundanz gearbeitet. Das Bewegungs-Überwachungsmodul 11 besteht wiederum aus einem ersten Bewegungserfassungsmodul 20 und einem zweiten Bewegungserfassungsmodul 30. Das erste Bewegungserfassungsmodul 20 entspricht im Wesentlichen der Ausführung, wie es im Zusammenhang mit Figur 3 erläutert wurde. Wiederum werden die in kurzen Intervallen dtₙ, bzw. mit einer entsprechenden Abtastrate, erfassten ersten Kabinenpositionen P1ₜ als aktuelle erste bereinigte Kabinenposition P1 direkt an die Aufzugssteuerung 10 weitergeleitet. Im Unterschied zum Ausführungsbeispiel von Figur 3 werden jedoch direkt zu jedem kurzen Intervall dtₙ die zugehörigen ersten vorläufigen Bewegungsgrössen, bzw. im Beispiel die vorläufige Fahrgeschwindigkeit V1_{_t=-10}, V1_{_t=-20}, V1_{_t}, berechnet und, wie in Fig. 6 ersichtlich, im Speicher 29 zwischengespeichert. Im Zwischenspeicher 29 werden also mehrere den möglichen Zeitintervallen dt zugeordnete, erste vorläufige Fahrgeschwindigkeiten V1_ₜ₌₋₁₀, V1_ₜ₌₋₂₀, V1_{_t} gespeichert. Diese Werte im Zwischenspeicher 29 werden natürlich mit jeder Folgeposition wieder überschrieben. Analog zum Ausführungsbeispiel von Figur 3 bestimmt der Beschleunigungsrechner 25 auf der Basis der systembedingten Genauigkeit ds, der Positionserfassung und der aktuellen ersten Beschleunigung A1, das optimale Zeitintervall dt zur Ermittlung der ersten bereinigten Bewegungsgrösse S1, V1 der Aufzugskabine. Das Bewegungserfassungsmodul 20 ruft die, dem entsprechenden optimalen Zeitintervall zugeordnete, erste vorläufige Bewegungsgrösse, bzw. die erste vorläufige Fahrgeschwindigkeit V1_{_n}, aus dem Speicher 29 ab und gibt diese direkt als erste bereinigte Bewegungsgrösse an die Aufzugssteuerung 10 ab.
Weiter beinhaltet natürlich auch das Bewegungs-Überwachungsmodul 11 gemäss der Ausführung von Figur 5 die Überwachungseinheit 26, welche die erste bereinigte Fahrgeschwindigkeit V1 mit einer oder mehreren Grenzgeschwindigkeiten VG vergleicht und welche bei Feststellung einer Überschreitung dieser Grenzwerte, bzw. dieser Grenzgeschwindigkeiten VG, den Sicherheitskreis 40 unterbricht und damit den Antrieb 5 stillgesetzt oder über eine Bremssteuerung 41 eine Sicherheitsbremse 13 betätigt. Auch in dieser Ausführung beinhaltet das erste Bewegungserfassungsmodul 20 weiter die Absturzüberwachung 27, welche die gemessene erste Beschleunigung A1 mit einem Beschleunigungsgrenzwert AG vergleicht und allenfalls über die Bremssteuerung 41 die Sicherheitsbremse 13 betätigt.

In einem weiteren Unterschied zur Ausführung von Figur 3 ist das zweite Bewegungserfassungsmodul 30 des Ausführungsbeispiels von Figur 5 nun im Wesentlichen eine vollumfängliche Kopie des ersten Bewegungsmoduls 20.
Beide Bewegungsmodule 20, 30 beinhalten somit zumindest einen der Sensoren 21, 31, die mit dem Signalträger 9 zusammenwirken und welche die aktuellen vorläufigen Kabinenpositionen P1, P2 unabhängig voneinander bestimmen. Wegrechner 22, 32 ermitteln aus einander nachfolgenden Kabinenpositionen Weginkremente oder die zurückgelegten Fahrwege S1, S2 und voneinander unabhängige Geschwindigkeitsrechner 23, 33 ermitteln aus den Fahrwegsinformationen S1, S2 entsprechende Fahrgeschwindigkeiten V1, V2 und speichern diese Resultate in entsprechenden Speichern 29, 39. Die Erfassung der vorgenannten Daten erfolgt in kurzen Zeitintervallen und die Ermittlung oder Bestimmung der ersten und zweiten bereinigten Bewegungsgrössen erfolgt in optimalen Zeitintervallen dt.
Zur Festlegung des optimalen Zeitintervalls dt beinhalten beide Bewegungsmodule 20, 30 Beschleunigungssensoren 24, 34, welche die aktuellen ersten und zweiten Beschleunigungen A1, A2 der Aufzugskabine erfassen. Die Beschleunigungsrechner 25, 35 bestimmen in Abhängigkeit der gemessenen ersten und zweiten Beschleunigungen A1, A2 und der systembedingten Genauigkeit ds der Positionserfassung das optimale erste und zweite Zeitintervall dt1, dt2 zur Bestimmung der bereinigten Bewegungsgrössen.

Beide Bewegungserfassungsmodule 20, 30 beinhalten weiter Überwachungseinheiten 26, 36, welche die ersten und zweiten Fahrgeschwindigkeiten V1, V2 mit einer oder mehreren Grenzgeschwindigkeiten VG vergleichen. Bei Feststellung einer Überschreitung dieser Grenzwerte, bzw. Grenzgeschwindigkeiten VG, wird von den Bremsmodulen 20, 30, unabhängig voneinander, der Sicherheitskreis 40 unterbrochen und damit der Antrieb 5 stillgesetzt, oder es wird, wiederum unabhängig voneinander, über die Bremssteuerung 41 die Sicherheitsbremse 13 betätigt. Damit ist eine Sicherheit stark erhöht, da Grenzwerte von zwei getrennten Systemen erfasst, ausgewertet und beurteilt werden und ebenso erforderliche Massnahmen getrennt aktiviert werden.

Weiter beinhalten nach dem vorliegenden Beispiel beide Bewegungserfassungsmodule 20, 30 auch je eine Absturzüberwachung 27, 37, wobei die gemessenen ersten und zweiten Beschleunigungen A1, A2 mit einem Beschleunigungsgrenzwert AG verglichen werden und bei Detektion eines zu hohen Beschleunigungswerts (A1 oder A2 grösser AG) über die Bremssteuerung 41 direkt die Sicherheitsbremse 13 betätigt wird.

Zur internen Überprüfung beinhalten beide Bewegungsmodule 20, 30 einen Vergleicher 28, 38, welcher ein erstes Signal F1 des ersten Bewegungsmoduls 20 mit einem zweiten Signal F2 des zweiten Bewegungsmoduls 30 vergleicht. Der erste Vergleicher 28 des ersten Bewegungsmoduls 20 vergleicht die vom zweiten Bewegungserfassungsmodul 30 erfassten zweiten Signale F2, wie die zweiten Bewegungsgrössen P2, V2, sowie die zweite Beschleunigung A2 mit den entsprechenden eigenen ersten Signalen F1, wie den ersten Bewegungsgrössen P1, V1 und der ersten Beschleunigung A1. D er zweite Vergleicher 38 des zweiten Bewegungsmoduls 30 vergleicht die vom ersten Bewegungserfassungsmodul 20 erfassten ersten Signale F1 mit den entsprechenden eigenen zweiten Signalen F2. Beide Vergleicher 28, 38 generieren einen Warnlevel 42, wenn eine relevante Abweichung zwischen den korrespondierenden ersten und zweiten Signalen F1, F2, bzw. den Werten P1/P2, S1/S2, V1/V2, A1/A2 erkannt wird. In den Vergleich können auch Zwischenergebnisse, wie die Zeitintervalle dt1, dt2 oder berechnete Weginkremente, etc. fallen. Aufgrund des Warnlevels 42 wird im Beispiel die Aufzugssteuerung 10 angewiesen die aktuelle Fahrt zu vollenden und dann den Aufzug stillzusetzten. Da weiterhin beide Bewegungsmodule 20, 30 allenfalls erforderliche Sicherheitsmassnahmen auslösen können, ist eine Sicherheit weiterhin gegeben, da ein gleichzeitiges Versagen beider Bewegungsmodule unwahrscheinlich ist.
Die beiden Bewegungsmodule 20, 30 sind als jeweils eigene Funktionsgruppen 20a, 30a aufgebaut aufgebaut. Dies bedeutet, dass die Funktionsgruppen 20a, 30a grundsätzlich autonom arbeiten, beispielsweise über eigene Energiereseven verfügen und beispielsweise in der Produktion unabhängig voneinander getestet werden können.

Eines der beiden Bewegungsmodule 20, 30, bzw. eine der beiden Funktionsgruppen 20a, 30a ist als Master bestimmt. Im vorliegenden Beispiel ist dies das Bewegungsmodul 20. Das Bewegungsmodul 20 stellt die ermittelten ersten Bewegungsgrössen P1, V1 der Aufzugssteuerung zur Fahrtenregelung zur Verfügung.

Variationen der Ausführungen sind möglich. So kann selbstverständlich der Signalträger 9 auf zwei redundante Träger aufgeteilt werden. Die Funktionsgruppen 20a, 30a gemäss Figur 5 können analog zur Bauform von Figur 3 auf redundante Prozessoren und Baugruppen aufgeteilt sein. Sie können auch zu einer Funktionsgruppe zusammengefügt werden. Anstelle des magnetisch kodierten Signalträgers können andere Systeme, wie ein ultraschallgestütztes Wegmesssystem, ein Bilderkennungssystem oder ein Wegmesssystem mit Inkrementalgeber, etc. verwendet werden. Es können auch unterschiedliche Erfassungssysteme kombiniert werden. Das erste Bewegungsmodul 20 kann mit einem magnetischen Kode arbeiten und das zweite Bewegungsmodul 30 kann auf der Basis von Ultraschall arbeiten. Die Speicher- und Berechnungsarchitektur der Ausführungsbeispiele kann natürlich unter den Figuren getauscht werden.

## Patentansprüche

1. Bewegungs-Überwachungssystem (11) zum Überwachen einer Bewegung einer Aufzugskabine (2) einer Aufzugsanlage (1), beinhaltend
- ein erstes Bewegungserfassungsmodul (20) zum Ermitteln einer ersten bereinigten Bewegungsgrösse (P1, S1, V1) in einem ersten Zeitintervall (dt1),
- einen ersten Beschleunigungssensor (24) zur Erfassung einer ersten Beschleunigung (A1) der Aufzugskabine (2), **dadurch gekennzeichnet, dass**
das erste Bewegungserfassungsmodul (20) das erste Zeitintervall (dt1) zur Ermittlung der ersten bereinigten Bewegungsgrösse (P1, S1, V1) der Aufzugskabine (2) in Abhängigkeit der ersten Beschleunigung (A1) der Aufzugskabine (2) festlegt.

2. Bewegungs-Überwachungssystem (11) gemäss Anspruch 1, wobei das erste Bewegungserfassungsmodul (20) erste vorläufige Bewegungsgrössen (P1ₜ, S1ₜ, V1ₜ) in unterschiedlichen Zeitintervallen (dtₙ) ermittelt, diese ersten vorläufigen Bewegungsgrössen (P1ₜ, S1ₜ, V1ₜ) in einem Speicher (29) speichert und zur Ermittlung der ersten bereinigten Bewegungsgrösse (P1, S1, V1) das erste Zeitintervall (dt1) in Abhängigkeit der ersten Beschleunigung (A1) festlegt und die diesem ersten Zeitintervall (dt1) entsprechende, erste vorläufige Bewegungsgrösse (P1ₜ, S1ₜ, V1ₜ) aus dem Speicher (29) ausliest und als erste bereinigte Bewegungsgrösse (P1, S1, V1) festlegt, oder die diesem ersten Zeitintervall (dt1) entsprechenden ersten vorläufigen Bewegungsgrössen (P1ₜ, S1ₜ, V1ₜ) aus dem Speicher (29) ausliest und die zugehörige erste bereinigte Bewegungsgrösse (P1, S1, V1) berechnet und festlegt.

3. Bewegungs-Überwachungssystem (11) gemäss einem der Ansprüche 1 oder 2, beinhaltend
ein zweites Bewegungserfassungsmodul (30) zum Ermitteln einer zweiten bereinigten Bewegungsgrössen (P2, S2, V2) in einem zweiten Zeitintervall (dt2), wobei
- das zweite Bewegungserfassungsmodul (30) das zweite Zeitintervall (dt2) zur Ermittlung der zweiten bereinigten Bewegungsgrösse (P2, S2, V2) der Aufzugskabine (2) in Abhängigkeit der vom ersten Beschleunigungssensor (24) erfassten ersten Beschleunigung (A1) der Aufzugskabine (2) festlegt, oder das zweite Zeitintervall (dt2) zur Ermittlung der zweiten bereinigten Bewegungsgrösse (P2, S2, V2) der Aufzugskabine (2) gleich dem ersten Zeitintervall (dt1) setzt, oder
- das zweite Bewegungserfassungsmodul (30) das zweite Zeitintervall (dt2) zur Ermittlung der zweiten bereinigten Bewegungsgrösse (P2, S2, V2) der Aufzugskabine (2) in Abhängigkeit einer von einem zweiten Beschleunigungssensor (34) erfassten zweiten Beschleunigung (A2) der Aufzugskabine (2) festlegt.

4. Bewegungs-Überwachungssystem (11) gemäss Anspruch 3, wobei die vom ersten und vom zweiten Bewegungserfassungsmodul (20, 30) ermittelten ersten und zweiten bereinigten Bewegungsgrössen (P1, P2, S1, S2, V1, V2) zumindest eine erste oder zweite Fahrgeschwindigkeit (V1, V2), ein erster oder zweiter Fahrweg (S1, S2) oder eine erste oder zweite Position (P1, P2) der Aufzugskabine (2) sind, und die beiden Bewegungserfassungsmodule (20, 30) dazu je einen ersten und einen zweiten Sensor (21, 31) zur Erfassung der ersten oder der zweiten Fahrgeschwindigkeit (V1, V2), des ersten oder des zweiten Fahrwegs (S1, S2) oder der ersten oder der zweiten Position (P1, P2) der Aufzugskabine (2) im Fahrschacht beinhalten.

5. Bewegungs-Überwachungssystem (11) gemäss Anspruch 4, wobei der erste oder zweite Sensor (21, 31) zur Erfassung der ersten oder zweiten Position (P1, P2) der Aufzugskabine (2) im Fahrschacht ein magnetisches, ein optisches, ein akustisches oder ein elektrisches Signal aufnimmt, und der erste oder zweite Sensor (21, 31) zur Erfassung der ersten oder zweiten Position (P1, P2) der Aufzugskabine (2) im Fahrschacht dazu mit entsprechend ausgebildeten Signalerzeugern, Signalträgern (9) und/oder Signalreflektoren zusammenwirkt.

6. Bewegungs-Überwachungssystem (11) gemäss einem der Ansprüche 1 bis 5, wobei
- das Bewegungs-Überwachungssystem (11) zumindest eine der ersten oder zweiten bereinigten Bewegungsgrössen (P1, P2, S1, S2, V1, V2) der Aufzugskabine (2) an eine Aufzugssteuerung (10) der Aufzugsanlage (1) weitergibt, und/oder
- das Bewegungs-Überwachungssystem (11) zumindest eine der ersten oder zweiten bereinigten Bewegungsgrössen (P1, P2, S1, S2, V1, V2) der Aufzugskabine (2) mit mindestens einem Grenzwert (PG, SG, VG) vergleicht und bei Überschreitung des Grenzwerts (PG, SG, VG) eine Sicherheitsmassnahme auslöst.

7. Bewegungs-Überwachungssystem (11) gemäss einem der Ansprüche 3 bis 6, wobei
- das erste Bewegungserfassungsmodul (20) und der erste Beschleunigungssensor (24) eine erste Funktionsgruppe (20a) bilden,
- das zweite Bewegungserfassungsmodul (30) und der zweite Beschleunigungssensor (34) eine zweite Funktionsgruppe (30a) bilden, und
- das Bewegungs-Überwachungssystem (11) zumindest ein vom ersten Bewegungserfassungsmodul (20) in der ersten Funktionsgruppe (20a) erfasstes oder ermitteltes erstes Signal (F1), wie die erste bereinigte Bewegungsgrösse (P1, S1, V1), die erste Beschleunigung (A1) oder ein Zwischenergebnis des ersten Bewegungserfassungsmoduls (20), mit einem, vom zweiten Bewegungserfassungsmodul (30) in der zweiten Funktionsgruppe (30a) erfassten oder ermittelten, zum ersten Signal (F1) gleichartigen, zweiten Signal (F2), wie die zweite bereinigte Bewegungsgrösse (P2, S2, V2), die zweite Beschleunigung (A2) oder ein Zwischenergebnis des zweiten Bewegungserfassungsmoduls (30), vergleicht, und das Bewegungs-Überwachungssystem (11) ein Warnsignal (42) ausgibt, wenn Abweichungen zweischen dem ersten Signal (F1) und dem zweiten Signal (F2) festgestellt werden.

8. Bewegungs-Überwachungssystem (11) gemäss Anspruch 7, wobei die erste und die zweite Funktionsgruppe (20a, 30a) die ersten und zweiten Signale (F1, F2) der jeweils anderen Funktionsgruppe mit den gleichartigen zweiten oder ersten Signalen (F2, F1) der eigenen Funktionsgruppe vergleicht und beide Funktionsgruppen das Warnsignal (42) ausgeben, wenn eine Abweichung festgestellt ist.

9. Bewegungs-Überwachungssystem (11) gemäss Anspruch 7 oder 8, wobei die Ausgabe eines Warnsignals (42) eine Stillsetzung der Aufzugskabine (2) bewirkt, nachdem ein aktueller Fahrbefehl oder ein anstehender Fahrablauf ordnungsgemäss abgeschlossen ist.

10. Bewegungs-Überwachungssystem (11) nach einem der vorstehenden Ansprüche, wobei
- die Sicherheitsmassnahme ein Unterbrechen eines Sicherheitskreises (40) bewirkt und dementsprechend ein Anhalten der Aufzugskabine (2) durch normale Betriebsmittel bewirkt, und / oder
- die Sicherheitsmassnahme eine Aktivierung einer Notbremsvorrichtung (13) bewirkt, wodurch ein Anhalten der der Aufzugskabine (2) bei einem Versagen der normalen Betriebsmittel erfolgt.

11. Bewegungs-Überwachungssystem (11) gemäss einem der vorstehenden Ansprüche, wobei das Bewegungs-Überwachungssystem (11) die Notbremsvorrichtung (13) aktiviert, wenn der vom ersten und / oder zweiten Beschleunigungssensor (24, 34) gemessene Beschleunigungswert (A1, A2) über einen Zeitbereich einen vorbestimmten Beschleunigungswert (AG) übersteigt.

12. Aufzugsanlage mit einer Aufzugskabine zum Befördern von Personen oder Gütern, wobei die Aufzugskabine zum Überwachen einer Bewegung der Aufzugskabine (2) ein Bewegungs-Überwachungssystem (11) gemäss einem Ansprüche 1 bis 11 beinhaltet.

13. Verfahren zum Überwachen einer Bewegung einer Aufzugskabine, beinhaltend die Schritte:
- Ermitteln einer ersten bereinigten Bewegungsgrösse (P1, S1, V1) in einem ersten Zeitintervall (dt1),
- Erfassen einer ersten Beschleunigung (A1) der Aufzugskabine (2), das Verfahren **gekennzeichnet durch** den Schritt:
- Festlegen des ersten Zeitintervalls (dt1) zur Ermittlung der ersten bereinigten Bewegungsgrösse (P1, S1, V1) in Abhängigkeit der erfassten ersten Beschleunigung (A1) oder einer Fahrinformation der Aufzugskabine (2).

14. Verfahren zum Überwachen der Bewegung der Aufzugskabine gemäss Anspruch 13, wobei
- erste vorläufige Bewegungsgrössen (P1_{_t}, S1_{_t}, V1_{_t}) in unterschiedlichen Zeitintervallen (dtₙ) ermittelt werden,
- diese ersten vorläufigen Bewegungsgrössen (P1_{_t}, S_{_t}, V1_{_t}) gespeichert werden,
- zur Ermittlung der ersten bereinigten Bewegungsgrösse (P1, S1, V1) das erste Zeitintervall (dt1) in Abhängigkeit der erfassten Beschleunigung (A1) festgelegt wird, und
- die diesem Zeitintervall (dt) entsprechende erste vorläufige Bewegungsgrösse (P1_{_t}, S1_{_}t, V1_{_t}) aus den Speicher ausgelesen und als erste bereinigte Bewegungsgrösse (P1, S1, V1) festgelegt wird, oder
die diesem ersten Zeitintervall (dt1) entsprechenden ersten vorläufigen Bewegungsgrössen (P1_{_t}, S1_{_t}, V1_{_t}) aus dem Speicher ausgelesen und die zugehörige erste bereinigte Bewegungsgrösse (P1, S1, V1) berechnet und festgelegt wird.

## Claims

1. A movement monitoring system (11) for monitoring a movement of a lift car (2) of a lift system (1), containing
- a first movement detection module (20) for determining a first adjusted movement value (P1, S1, V1) in a first time interval (dt1),
- a first acceleration sensor (24) for detecting a first acceleration (A1) of the lift car (2),
**characterised in that**
the first movement detection module (20) determines the first time interval (dt1) for determining the first adjusted movement value (P1, S1, V1) of the lift car (2) as a function of the first acceleration (A1) of the lift car (2).

2. The movement monitoring system (11) according to Claim 1, wherein the first movement detection module (20) determines first preliminary movement values (P1ₜ, S1ₜ, V1ₜ) at different time intervals (dtₙ), stores these first preliminary movement values (P1ₜ, S1ₜ, V1ₜ) in a memory (29) and, to determine the first adj usted movement value (P1, S1, V1), determines the first time interval (dt1) as a function of the first acceleration (A1) and reads the first preliminary movement value (P1ₜ, S1ₜ, V1ₜ) corresponding to this first time interval (dt1) from the memory (29) and determines the same as first adjusted movement value (P1, S1, V1), or reads the first preliminary movement values (P1ₜ, S1ₜ, V1ₜ) corresponding to this first time interval (dt1) from the memory (29) and calculates and determines the associated first adjusted movement value (P1, S1, V1).

3. The movement monitoring system (11) according to one of Claims 1 or 2, containing
a second movement detection module (30) for determining a second adjusted movement value (P2, S2, V2) in a second time interval (dt2), wherein
- the second movement detection module (30) determines the second time interval (dt2) for determining the second adjusted movement value (P2, S2, V2) of the lift car (2) as a function of the first acceleration (A1) of the lift car (2) detected by the first acceleration sensor (24), or the second time interval (dt2) for determining the second adjusted movement value (P2, S2, V2) of the lift car (2) is equal to the first time interval (dt1), or
- the second movement detection module (30) determines the second time interval (dt2) for determining the second adjusted movement value (P2, S2, V2) of the lift car (2) as a function of a second acceleration (A2) of the lift car (2) detected by a second acceleration sensor (34).

4. The movement monitoring system (11) according to Claim 3, wherein the first and second adjusted movement values (P1, P2, S1, S2, V1, V2) determined by the first and by the second movement detection module (20, 30) are at least one first or second travelling speed (V1, V2), a first or second travel path (S1, S2) or a first or second position (P1, P2) of the lift car (2), and the two movement detection modules (20, 30) to this end each contain one first and one second sensor (21, 31) for detecting the first or the second travelling speed (V1, V2), the first or the second travel path (S1, S2) or the first or the second position (P1, P2) of the lift car (2) in the lift shaft.

5. The movement monitoring system (11) according to Claim 4, wherein the first or second sensor (21, 31) for detecting the first or second position (P1, P2) of the lift car (2) in the lift shaft records a magnetic, an optical, an acoustic or an electrical signal, and to detect the first or second position (P1, P2) of the lift car (2) in the lift shaft, the first or second sensor (21, 31) interacts with correspondingly constructed signal generators, signal carriers (9) and/or signal reflectors.

6. The movement monitoring system (11) according to one of Claims 1 to 5, wherein
- the movement monitoring system (11) forwards at least one of the first or second adjusted movement values (P1, P2, S1, S2, V1, V2) of the lift car (2) to a lift control (10) of the lift system (1), and/or
- the movement monitoring system (11) compares at least one of the first or second adjusted movement values (P1, P2, S1, S2, V1, V2) of the lift car (2) with at least one limit value (PG, SG, VG) and triggers a safety measure if the limit value is exceeded (PG, SG, VG).

7. The movement monitoring system (11) according to one of Claims 3 to 6, wherein
- the first movement detection module (20) and the first acceleration sensor (24) form a first functional group (20a),
- the second movement detection module (30) and the second acceleration sensor (34) form a second functional group (30a), and
- the movement monitoring system (11) compares at least one first signal (F1) detected or determined by the first movement detection module (20) in the first functional group (20a), such as the first adjusted movement value (P1, S1, V1), the first acceleration (A1) or an intermediate result of the first movement detection module (20), with a second signal (F2), similar to the first signal (F1) and detected or determined by the second movement detection module (30) in the second functional group (30a), such as the second adjusted movement value (P2, S2, V2), the second acceleration (A2) or an intermediate result of the second movement detection module (30), and the movement monitoring system (11) outputs a warning signal (42) if deviations are discovered between the first signal (F1) and the second signal (F2).

8. The movement monitoring system (11) according to Claim 7, wherein
the first and the second functional group (20a, 30a) compares the first and second signals (F1, F2) of the respectively other functional group with the similar second or first signals (F2, F1) of its own functional group and both functional groups output the warning signal (42) if a deviation is discovered.

9. The movement monitoring system (11) according to Claim 7 or 8, wherein
outputting a warning signal (42) effects a shutdown of the lift car (2) after a current travel command or a pending travel process has been successfully completed.

10. The movement monitoring system (11) according to one of the preceding claims, wherein
- the safety measure effects an interruption of a safety circuit (40) and correspondingly effects stopping of the lift car (2) by normal operating means, and/or
- the safety measure effects an activation of an emergency braking device (13), as a result of which the lift car (2) is stopped in the event of failure of the normal operating means.

11. The movement monitoring system (11) according to one of the preceding claims, wherein the movement monitoring system (11) activates the emergency braking device (13) if the acceleration value (A1, A2) measured by the first and/or second acceleration sensor (24, 34) exceeds a predetermined acceleration value (AG) over a time period.

12. A lift system having a lift car for conveying people or goods, wherein the lift car contains a movement monitoring system (11) according to one of Claims 1 to 11 for monitoring movement of the lift car (2).

13. A method for monitoring a movement of a lift car, containing the steps:
- determining a first adjusted movement value (P1, S1, V1) in a first time interval (dt1),
- detecting a first acceleration (A1) of the lift car (2),
the method **characterised by** the step:
- determining the first time interval (dt1) for determining the first adjusted movement value (P1, S1, V1) as a function of the detected first acceleration (A1) or travel information of the lift car (2).

14. The method for monitoring the lift car according to Claim 13, wherein
- first preliminary movement values (P1_{_t}, S1_{_t}, V1_{_t}) are determined at different time intervals (dtₙ),
- these first preliminary movement values (P1_{_t}, S1_{_t}, V1_{_t}) are stored,
- to adjust the first adjusted movement value (P1, S1, V1), the first time interval (dt1) is determined as a function of the detected acceleration (A1), and
- the first preliminary movement value (P1_{_t}, S1_{_t}, V1_{_t}) corresponding to this time interval (dt) is read from the memory and determined as the first adjusted movement value (P1, S1, V1),
or the first preliminary movement values (P1_{_t}, S1_{_t}, V1_{_t}) corresponding to this first time interval (dt1) are read from the memory and the associated first adjusted movement value (P1, S1, V1) is calculated and determined.

## Revendications

1. Système de surveillance de déplacement (11) pour surveiller un déplacement d'une cabine d'ascenseur (2) d'une installation d'ascenseur (1), comprenant
- un premier module de détection de déplacement (20) pour déterminer une première grandeur de déplacement corrigée (P1, S1, V1) dans un premier intervalle de temps (dt1),
- un premier capteur d'accélération (24) pour détecter une première accélération (A1) de la cabine d'ascenseur (2),
**caractérisé en ce que** le premier module de détection de déplacement (20) fixe le premier intervalle de temps (dt1) pour déterminer la première grandeur de déplacement corrigée (P1, S1, V1) de la cabine d'ascenseur (2) en fonction de la première accélération (A1) de ladite cabine (2).

2. Système de surveillance de déplacement (11) selon la revendication 1, le premier module de détection de déplacement (20) déterminant des premières grandeurs de déplacement provisoires (P1ₜ, S1ₜ, V1ₜ) dans différents intervalles de temps (dtₙ), stockant ces premières grandeurs de déplacement provisoires (P1ₜ, S1ₜ, V1ₜ) dans une mémoire (29) et, pour déterminer la première grandeur de déplacement corrigée (P1, S1, V1), fixe le premier intervalle de temps (dt1) en fonction de la première accélération (A1) et extrait de la mémoire la première grandeur de déplacement provisoire (P1ₜ, S1ₜ, V1ₜ) correspondant à ce premier intervalle de temps (dt1) et la fixe comme première grandeur de déplacement corrigée (P1, S1, V1), ou extrait de la mémoire les premières grandeurs de déplacement provisoires (P1ₜ, S1ₜ, V1ₜ) correspondant à ce premier intervalle de temps (dt1) et calcule et fixe la première grandeur de déplacement corrigée (P1, S1, V1) associée.

3. Système de surveillance de déplacement (11) selon l'une des revendications 1 ou 2, comprenant
un deuxième module de détection de déplacement (30) pour déterminer une deuxième grandeur de déplacement corrigée (P2, S2, V2) dans un deuxième intervalle de temps (dt2),
- le deuxième module de détection de déplacement (30) fixant le deuxième intervalle de temps (dt2) pour déterminer la deuxième grandeur de déplacement corrigée (P2, S2, V2) de la cabine d'ascenseur (2) en fonction de la première accélération (A1) de ladite cabine (2) détectée par le premier capteur d'accélération (24), ou le deuxième intervalle de temps (dt2) pour déterminer la deuxième grandeur de déplacement corrigée (P2, S2, V2) de la cabine d'ascenseur (2) étant assimilé au premier intervalle de temps (dt1), ou
- le deuxième module de détection de déplacement (30) fixant le deuxième intervalle de temps (dt2) pour déterminer la deuxième grandeur de déplacement corrigée (P2, S2, V2) de la cabine d'ascenseur (2) en fonction d'une deuxième accélération (A2) de ladite cabine (2) détectée par un deuxième capteur d'accélération (34).

4. Système de surveillance de déplacement (11) selon la revendication 3, les premières et deuxièmes valeurs de déplacement corrigées (P1, P2, S1, S2, V1, V2) étant au moins une première ou une deuxième vitesse (V1, V2), une première ou une deuxième trajectoire (S1, S2) ou une première ou une deuxième position (P1, P2) de la cabine d'ascenseur (2), et les deux modules de détection de déplacement (20, 30) contenant à cet effet respectivement un premier et un deuxième capteur (21, 31) pour détecter la première ou la deuxième vitesse (V1, V2), la première ou la deuxième trajectoire (S1, S2) ou la première ou la deuxième position (P1, P2) de la cabine d'ascenseur (2) dans la gaine.

5. Système de surveillance de déplacement (11) selon la revendication 4, le premier ou le deuxième capteur (21, 31) pour la détection de la première ou de la deuxième position (P1, P2) de la cabine d'ascenseur (2) dans la gaine recevant un signal magnétique, optique, acoustique ou électrique, et le premier ou le deuxième capteur (21, 31) pour la détection de la première ou de la deuxième position (P1, P2) de la gaine d'ascenseur (2) dans la gaine coopérant à cet effet avec des générateurs de signaux, des supports de signaux (9) et/ou des réflecteurs de signaux conçus d'une manière appropriée.

6. Système de surveillance de déplacement (11) selon l'une des revendications 1 à 5,
- le système de surveillance de déplacement (11) transmettant l'une au moins des premières et deuxièmes grandeurs de déplacement corrigées (P1, P2, S1, S2, V1, V2) de la cabine d'ascenseur (2) à une commande d'ascenseur (10) de l'installation d'ascenseur (1), et/ou
- le système de surveillance de déplacement (11) comparant l'une au moins des premières ou deuxièmes grandeurs de déplacement corrigées (P1, P2, S1, S2, V1, V2) de la cabine d'ascenseur (2) à au moins une valeur limite (PG, SG, VG), et déclenchant une mesure de sécurité en cas de dépassement de ladite valeur limite (PG, SG, VG).

7. Système de surveillance de déplacement (11) selon l'une des revendications 3 à 6,
- le premier module de détection de déplacement (20) et le premier capteur d'accélération (24) formant un premier groupe fonctionnel (20a),
- le deuxième module de détection de déplacement (30) et le deuxième capteur d'accélération (34) formant un deuxième groupe fonctionnel (30a), et
- le système de surveillance de déplacement (11) comparant au moins un premier signal (F1) détecté ou déterminé par le premier module de détection de déplacement (20) dans le premier groupe fonctionnel (20a), tel que la première grandeur de déplacement corrigée (P1, S1, V1), la première accélération (A1) ou un résultat intermédiaire du premier module de détection de déplacement (20), à un deuxième signal (F2) détecté ou déterminé par le deuxième module de détection de déplacement (30) dans le deuxième groupe fonctionnel (30a) et de même type que le premier signal (F1), tel que la deuxième grandeur de déplacement corrigée (P2, S2, V2), la deuxième accélération (A2) ou un résultat intermédiaire du deuxième module de détection de déplacement (30), et le système de surveillance de déplacement (11) émettant un signal d'avertissement (42) si des écarts entre le premier signal (F1) et le deuxième signal (F2) sont constatés.

8. Système de surveillance de déplacement (11) selon la revendication 7, les premier et deuxième groupes fonctionnels (20a, 30a) comparant les premier et deuxième signaux (F1, F2) de l'autre groupe fonctionnel aux premier et deuxième signaux (F2, F1) de même type de leur propre groupe fonctionnel, et les deux groupes fonctionnels émettant le signal d'avertissement (42) si un écart est constaté.

9. Système de surveillance de déplacement (11) selon la revendication 7 ou 8, l'émission d'un signal d'avertissement (42) provoquant une immobilisation de la cabine d'ascenseur (2) une fois qu'une instruction de circulation actuelle ou qu'un trajet en attente sont exécutés correctement.

10. Système de surveillance de déplacement (11) selon l'une des revendications précédentes,
- la mesure de sécurité provoquant une coupure d'un circuit de sécurité (40) et provoquant en conséquence un arrêt de la cabine d'ascenseur (2) grâce à un matériel normal, et/ou
- la mesure de sécurité provoquant une activation d'un dispositif de frein de secours (13), moyennant quoi un arrêt de la cabine d'ascenseur (2) a lieu en cas de défaillance du matériel normal.

11. Système de surveillance de déplacement (11) selon l'une des revendications précédentes, le système de surveillance de déplacement (11) activant le dispositif de frein de secours (13) si la valeur d'accélération (A1, A2) mesurée par les premier et/ou deuxième capteurs d'accélération (24, 34) dépasse sur une plage de temps une valeur d'accélération définie (AG).

12. Installation d'ascenseur avec une cabine d'ascenseur pour le transport de personnes ou de produits, la cabine d'ascenseur comportant, pour surveiller un déplacement de ladite cabine d'ascenseur (2), un système de surveillance de déplacement (11) selon l'une des revendications 1 à 11.

13. Procédé pour surveiller un déplacement d'une cabine d'ascenseur, comprenant les étapes consistant à :
- déterminer une première grandeur de déplacement corrigée (P1, S1, V1) dans un premier intervalle de temps (dt1),
- détecter une première accélération (A1) de la cabine d'ascenseur (2), le procédé étant **caractérisé par** l'étape qui consiste à :
- fixer le premier intervalle de temps (dt1) pour déterminer la première grandeur de déplacement corrigée (P1, S1, V1) en fonction de la première accélération (A1) détectée ou d'une information de circulation de la cabine d'ascenseur (2).

14. Procédé pour surveiller le déplacement de la cabine d'ascenseur selon la revendication 13,
- des premières grandeurs de déplacement provisoires (P1_{_t}, S1_{_t}, V1_{_t}) étant déterminées dans différents intervalles de temps (dtₙ),
- ces premières grandeurs de déplacement provisoires (P1_{_t}, S1_{_t}, V1_{_t}) étant stockées,
- pour déterminer la première grandeur de déplacement corrigée (P1, S1, V1), le premier intervalle de temps (dt₁) étant fixé en fonction de l'accélération (A1) détectée, et
- la première grandeur de déplacement provisoire (P1_{_t}, S1_{_t}, V1_{_t}) correspondant à cet intervalle de temps (dt) étant extraite de la mémoire et fixée comme première grandeur de déplacement corrigée (P1, S1, V1), ou
les premières grandeurs de déplacement provisoires (P1_{_t}, S1_{_t}, V1_{_t}) correspondant à ce premier intervalle de temps (dt1) étant extraites de la mémoire, et la première grandeur de déplacement corrigée (P1, S1, V1) associée étant calculée et fixée.
